# EUROPEAN PATENT APPLICATION

(11) **EP 1 703 196 A2**
(43) Date of publication of application: **20.09.2006**
(21) Application number: 06251404.7
(22) Date of filing: 16.03.2006
(51) Int. Cl.: F16M 13/02

(54) **Flat panel display TV stand**

(30) Priority: 16.03.2005 KR 20050007037; 10.11.2005 KR 20050037807; 10.11.2005 KR 20050037808; 10.11.2005 KR 20050037809; 10.11.2005 KR 20050037810
(71) Applicant: Lee, Kyung Jae, Seoul (KR)
(72) Inventor: Lee, Kyung Jae, Seoul (KR)
(74) Representative: Pingree, Oliver Norman

(57) **Abstract**

A flat panel display TV stand makes it possible to stably install a TV equipped with a flat panel display (e.g. LCD or PDP) (2) regardless of the type of wall (e.g. concrete wall, gypsum board wall, or wooden wall), on which the TV (2) is to be installed, as well as the size of the TV (2). The stand can fully support the weight of the TV and hides wires and cables drawn from the TV (2). This provides an aesthetic appearance. In addition, the stand can additionally accommodate peripheral devices (e.g. DVD player or VCR), which are typically used together with the TV (2). As such, the stand can be used for various purposes.

## Description

### BACKGROUND OF THE INVENTION

### Field of the invention

The present invention relates to a flat panel display TV stand for retaining a TV equipped with a flat panel display (e.g. LCD or PDP) while hiding wires and cables drawn from the TV.

### Description of the Prior Art

In general, a CRT-based TV has an electron gun mounted on a cathode-ray tube to display images and, due to this structure, protrudes backwards to some degree. When such a CRT-based TV is to be installed in a house or office, a separate stand is placed on the floor to support the TV.

As such, CRT-based TVs need an installation space corresponding to their own size (volume), which cannot be used for other purposes.

Recent preference for larger screens has caused TVs to have a larger size while occupying a larger space.

However, TVs equipped with a flat panel display (e.g. LCD or PDP), which has been developed by recent science and technology, are rapidly replacing CRT-based TVs, because they can provide a large and flat screen while having a small thickness. In other words, flat panel display TVs can solve the problem of CRT-based TVs, which occupy a large space, while satisfying various consumer needs.

When such a flat panel display TV is to be installed, a separate stand or tumtable is necessary. When installed on a wall, a wall stand is used.

Particularly, it is customary to use a fixed stand to support a flat panel display TV in such a manner that an end of the stand is fixed to a wall and the other end thereof is connected to the TV.

However, such a conventional fixed stand has a problem in that, once the TV is installed, it is impossible to adjust the height of the stand. This means that, when the user wants to vary the height, he must dissemble the stand and reinstall it in a new position.

In addition, the fixed stand cannot easily accommodate electronic products (e.g. DVD player or VCR), which are typically used together with the TV. Furthermore, various wires, which are drawn from the TV, are inevitably exposed to the outside and degrade the appearance.

### SUMMARY OF THE INVENTION

Accordingly, an aim of the present invention is to reduce the above-mentioned problems occurring in the prior art, and an object of the present invention is to provide a flat panel display TV stand for stably retaining a TV equipped with a flat panel display (e.g. LCD or PDP) while hiding wires and cables drawn from the TV and peripheral devices so that the stand can be used for various purposes.

According to the present invention, there is provided a flat panel display TV stand including a main frame fastened to a wall to stably accommodate a flat panel display TV (e.g. LCD or PDP) and a panel positioned in front of the main frame while hiding wires drawn from the flat panel display TV.

The main frame has first frames facing each other in an upright position with a gap between them and a plurality of second frames positioned in a longitudinal direction of an inside of the first frames.

The first frames have an end fastened to the wall while extending backwards, the other end of the first frames bends outwards and then extends backwards, and insertion holes are formed on a bent inner surface of the first frames.

The insertion holes are formed in a longitudinal direction of the first frames.

The insertion holes have first insertion holes formed on one side of the bent inner surface of the first frames and second insertion holes formed in a line together with the first insertion holes while being spaced from the first insertion holes.

Both ends of the second frames are fixed on the first frames, and the second frames have fixing holes for installation on the wall.

One of the second frames positioned near a top of the main frame has a wire through-hole formed thereon so that wires drawn from the flat panel display TV can pass through.

One of the second frames positioned near a bottom of the main frame has a height adjustment unit to maintain a predetermined height from a floor to a bottom of the first frames.

The panel has first latches formed on upper and lower portions of left and right sides of an inner surface of the panel, respectively, to be inserted into the first insertion holes of the first frames.

The first frames have a bent portion formed on a lower end of an exterior of the first frames to avoid interference with a lower molding positioned along a lower side of the wall.

A wiring hole is formed on the panel of the main frame so that wires drawn from the flat panel display TV installed on the support frame and cables drawn from input and output terminals on a rear surface of the flat panel display TV can pass through.

The main frame has a support frame to accommodate the flat panel display TV.

The support frame includes retainers formed in a longitudinal direction of the first frames while being spaced from each other, the retainers extending backwards to be inserted into the respective second insertion holes formed on opposite sides of the first frames to stably accommodate the flat panel display TV; first support frames connected to the retainers in a transverse direction; and second support frames having fastening holes formed on second support frame bodies for bolting to bolt holes formed on the rear surface of the flat panel display TV and catches retained on an inner surface of the second support frame bodies while being spaced from each other for installation on first support frame bodies.

Each retainer has a retaining piece formed on an end of the retainer so that an end of the retaining piece bends downwards to be retained in the corresponding second insertion hole and a coupling hole formed on the other end of the retainer to be coupled to the first support frames.

An anti-floating clip is positioned on an upper end of the retaining piece of each retainer to prevent floating when coupled to the second insertion hole.

A compression member is positioned in the coupling hole to compress a surface of the first support frames.

The fastening holes of the second support frames are arranged in a longitudinal direction of the second support frame bodies and have a row of normal holes and a row of elongated holes positioned next to the normal holes so that the second support frames can be coupled to the fastening holes in conformity with a size of the flat panel display TV.

Anti-floating members are positioned on the catches of the second support frames to prevent the first support frames from floating left or right.

A shelf is positioned in front of the panel to accommodate a DVD player or VCR. The shelf has support brackets positioned on left and right sides of a lower surface of the shelf, the DVD player or VCR being mounted on the shelf, and shelf retainers connected to the respective support brackets to fix the shelf to the main frame.

### BRIEF DESCRIPTION OF THE DRAWINGS

The above and other objects, features and advantages of the present invention will be more apparent from the following detailed description taken in conjunction with the accompanying drawings, in which:
FIG. 1 shows a main frame of a flat panel display TV stand according to the present invention;
FIG. 2 is an exploded perspective view showing a flat panel display TV stand according to the present invention;
FIG. 3 is an assembled perspective view showing a flat panel display TV stand according to the present invention;
FIG. 4 shows a flat panel display TV stand according to a first embodiment of the present invention;
FIG. 5 is an exploded perspective view showing a flat panel display TV stand according to a second embodiment of the present invention;
FIGs. 6a to 6g show respective processes for installing a flat panel display TV stand according to a second embodiment of the present invention; and
FIG. 7 shows a flat panel display TV stand according to a third embodiment of the present invention.

### DETAILED DESCRIPTION OF THE PREFERRED EMBODIMENTS

Hereinafter, a preferred embodiment of the present invention will be described with reference to the accompanying drawings. In the following description and drawings, the same reference numerals are used to designate the same or similar components, and so repetition of the description on the same or similar components will be omitted.

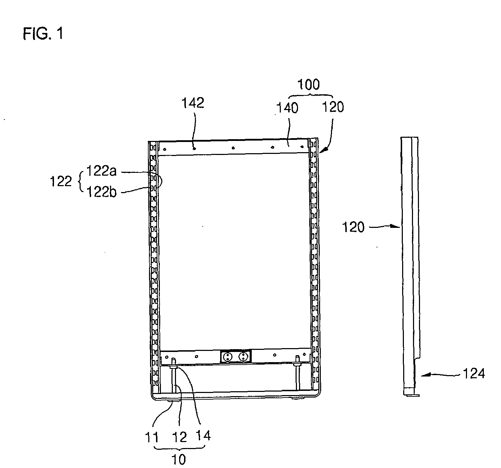

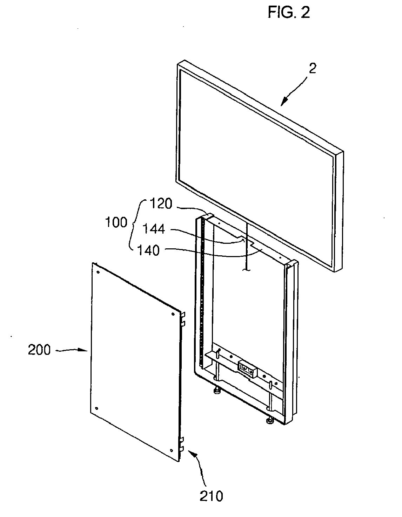

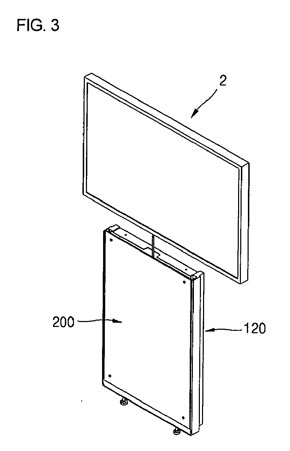

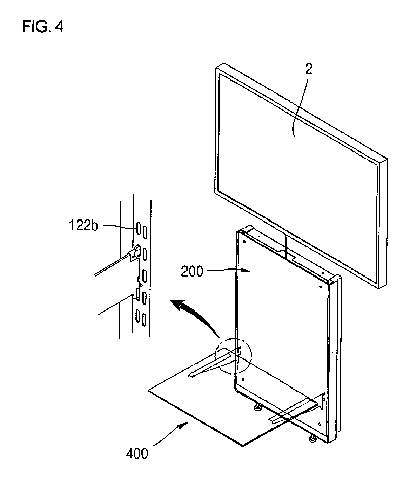

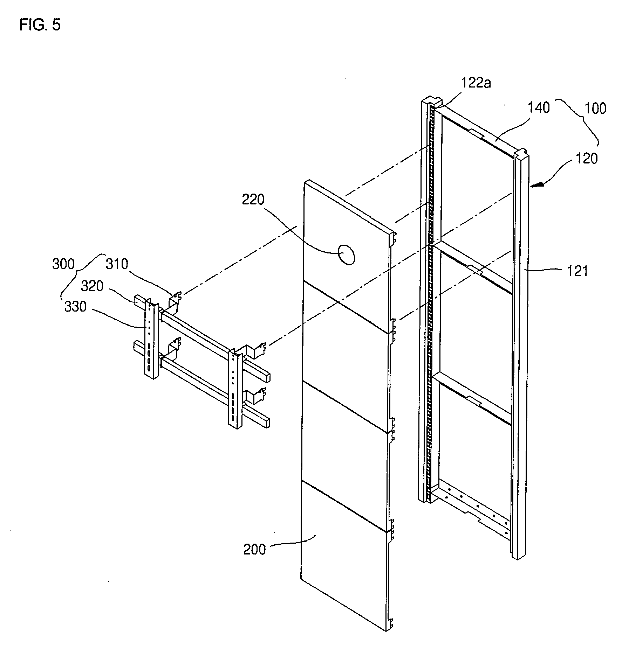

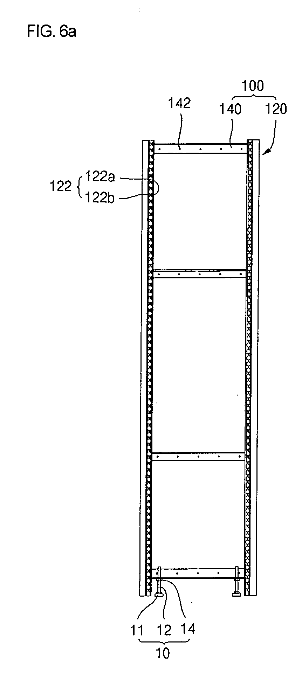

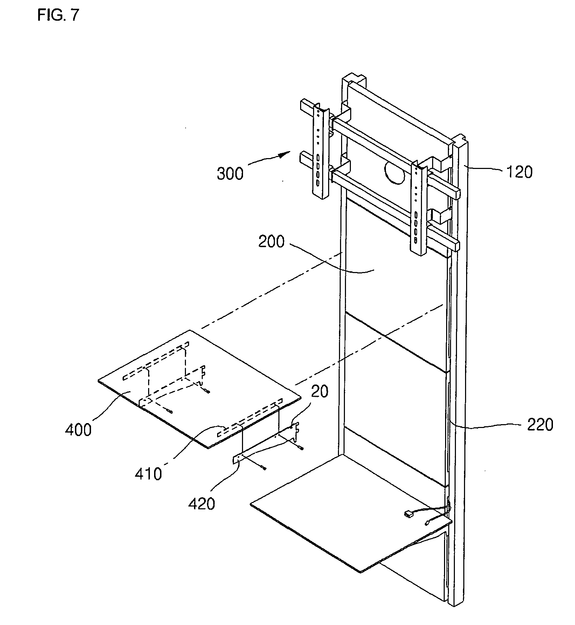

FIG. 1 shows a main frame of a flat panel display TV stand according to the present invention; FIG. 2 is an exploded perspective view showing a flat panel display TV stand according to the present invention; FIG. 3 is an assembled perspective view showing a flat panel display TV stand according to the present invention; FIG. 4 shows a flat panel display TV stand according to a first embodiment of the present invention; FIG. 5 is an exploded perspective view showing a flat panel display TV stand according to a second embodiment of the present invention; FIGs. 6a to 6g show respective processes for installing a flat panel display TV stand according to a second embodiment of the present invention; and FIG. 7 shows a flat panel display TV stand according to a third embodiment of the present invention.

Referring to the drawings, a flat panel display TV stand according to the present invention includes a main frame 100 fastened to a wall so that a flat panel display TV 2 equipped with an LCD or PDP, for example, can be installed stably and a panel 200 positioned in front of the main frame 100 while hiding wires drawn from the flat panel display TV 2.

The main frame 100 is provided with first frames 120, which face each other in an upright position with a gap between them.

The first frames 120 have an end fastened to a wall while extending backwards. The other end of the first frames 120 bends outwards and then extends backwards. Insertion holes 122 are formed on the bent inner surface.

Particularly, the insertion holes 122 are arranged in the longitudinal direction of the first frames 120 and include first insertion holes 122a formed on one side of the bent inner surface of the first frames 120 and second insertion holes 122b formed in a line together with the first insertion holes 122a with a predetermined spacing between them.

The first and second insertion holes 122a and 122b alternate with each other along the bent inner surface of the first frames 120 from the top to the bottom thereof.

The main frame 100 has a plurality of second frames 140 positioned in the longitudinal direction of the inside the first frames 120.

The second frames 140 have both ends fixed to the first frames 120 and are provided with a number of fixing holes 142 to be installed on a wall by separate screws.

One of the second frames 140 positioned near the top of the main frame 100 has a wire through-hole 144 formed thereon so that wires, which are drawn from the flat panel display TV 2, can pass through.

One of the second frames 140 positioned near the bottom of the main frame 100 is provided with a height adjustment unit 10 to maintain a predetermined height from the floor to the bottom of the first frames 120.

The height adjustment unit 10 includes adjustment bolts 12 formed on the second frame 140 positioned near the bottom of the main frame 100 in such a manner that they extend downwards while being spaced from each other, support members 11 made of an elastic material and positioned beneath the adjustment bolts 12, and adjustment nuts 14 fastened to the lower surface of the second frame 140 to be coupled to the adjustment bolts 12 so that the height of the main frame 100 can be adjusted.

The panel 200 has first latches 210 formed on upper and lower portions of left and right sides of the inner surface thereof to be inserted into the first insertion holes 122a of the first frames 120.

The first frames 120 have a bent portion 124 formed on the lower end of the exterior thereof to avoid interference with a lower molding, which is positioned along the lower side of the wall.

A construction according to a second embodiment of the present invention will now be described. The main frame 100 is provided with a support frame 300 to accommodate the flat panel display TV 2.

The main frame 100 has a panel 200 and a wiring hole 220 formed on the panel 200 so that wires, which are drawn from the flat panel display TV 2 installed on the support frame 300, and cables, which are drawn from various input and output terminals on the rear surface of the flat panel display TV 2, can pass through.

The support frame 300 has retainers 310 formed in the longitudinal direction of the first frames 120 while being spaced from each other. The retainers 310 extend backwards to be inserted into the second insertion holes 122b, which are formed on opposite sides of the first frames 120, to stably retain the flat panel display TV 2.

Each retainer 310 is provided with a first support frame 320 in the transverse direction.

In addition, each retainer 310 is provided with a second support frame 330, which includes a second support frame body 331, fastening holes 332 formed on the second support frame body 331 for bolting to bolt holes, which are formed on the rear surface of the flat panel display TV 2, and catches 334 formed on the inner surface of the second support frame body 331 while being spaced from each other for installation on the first support frame body 121.

Each retainer 310 has a retaining piece 312 formed on an end thereof in such a manner that an end of the retaining piece 312 bends downwards to be retained in the corresponding second insertion hole 122b and a coupling hole 314 formed on the other end of the retainer 310 so that the first support frame 320 can be coupled thereto.

The coupling hole 314 is sized to accommodate the first support frame 320.

An anti-floating clip 20 is positioned on the upper end of the retaining piece 312 of each retainer 310 to prevent floating when coupled to the second insertion hole 122b. The retaining piece 312, when inserted into the insertion hole 122b, is brought tightly into contact with the second insertion hole 122b by the anti-floating clip 20.

Each coupling hole 314 is associated with a compression member 30 for applying pressure to a surface of the first support frame 320. The compression member 30 includes a compression piece 32 coupled to the retainer 310 and an adjustment unit 34 coupled to the compression piece 32 so that the compression member 30 can move back and forth relative to the coupling hole 314. The adjustment unit 34 includes an adjustment screw 34a, which is grasped by the operator to rotate it, and an adjustment piece 34b coupled to the adjustment screw 34a.

The fastening holes 332 of the second support frame 330, which are arranged in the longitudinal direction of the second support frame body 331, include a row of normal holes 332a and a row of elongated holes 332b positioned next to the normal holes 332a so that the second support frame 330 can be coupled thereto in conformity with the size of the flat panel display TV 2.

The reason the fastening holes 332 of the second support frame 330 are divided into normal and elongated holes 332a and 332b is that the position of bolt holes of each flat panel display TV 2 varies. Such division makes it possible to conform to the varying position of the bolt holes.

Anti-floating members 40 are positioned on the catches 334 of the second support frame 330 to prevent the first support frame 320 from floating left or right.

Each anti-floating member 40 includes an anti-floating bracket 42 having a surface brought into contact with the inner surface of the second support frame body 331 and bent towards the outside thereof and an anti-floating bolt 44 extending through the anti-floating bracket 42 and the catches 334.

The panel 200 has shelves 400 positioned on the front surface thereof to accommodate a DVD player (not shown) or VCR (not shown).

Each shelf 400 includes support brackets 410 positioned on left and right sides of the lower surface thereof and shelf retainers 420 connected to the respective support brackets 410 to fix the shelf 400 to the main frame 100.

The support brackets 410 are connected to the shelf retainers 420 by separate fixing bolts. After assembling the support brackets 410 and the shelf retainers 420 into the shelf 400, it is inserted into corresponding second insertion holes 122b.

The shelf retainers 420 of the shelf 400, which are inserted into the second insertion holes 122b, have the same structure as the retaining pieces 312 of the retainers 310. The anti-floating clips 20 are positioned on the upper end of the shelf retainers 420.

A plurality of shelves 400 are arranged in the longitudinal direction of the main frame 100.

The panel 200 has through-holes 220 formed on both lateral surfaces thereof in the longitudinal direction so that wires or cables, which are drawn from a DVD player or VCR, can lead to the rear surface of the panel 200.

The installation and operation of the flat panel display TV stand according to the above embodiment of the present invention will now be described in detail.

As mentioned above, the flat panel display TV stand according to the present invention can retain a flat panel display TV, as well as hide wires and cables drawn from the flat display panel TV. FIGs. 1 to 4 show the flat panel display TV stand when used for hiding, and FIGs. 5 to 7 show the stand when used for both hiding and retaining.

Referring to FIG. 1, when the flat panel display TV stand is to be installed, the main fame 100 is positioned on a desired wall (not shown), for example, a concrete wall, gypsum board wall, or wooden wall.

The main frame 100 has a bent portion 124 formed thereon to avoid interference with a lower molding, which is positioned along the lower side of the wall, so that the stand can be fastened to the wall without a gap resulting from interference with the lower molding (not shown).

In order to stably install the main frame 100 on the wall, the height adjustment unit 10 on the second frame 140 of the main frame 100 is adjusted to select a desired position of the main frame 100 on the wall.

After selecting the desired position, the main frame 100 is placed in such a manner that a socket or multi-tap, which is to be connected to a plug on one end of wires drawn from the flat panel display TV, is positioned inside the main frame 100.

The height adjustment unit 10 has support members 11 positioned beneath the adjustment bolts 12 so that the installation height of the main frame 100 can be adjusted by rotating the adjustment bolts 12 in a direction.

The operator uses a level (not shown) positioned on the upper surface of the second frame 140 positioned near the bottom of the main frame 100 to check the overall horizontal condition of the main frame 100. If the main frame 100 is not properly leveled, the adjustment bolts 14 are used to readjust the height.

The fixing holes 142 of the second frame 140, which are arranged from the top to the bottom of the main frame 100, are subjected to bolting. The insertion holes 122 of the first frames 120 will be described later.

Referring to FIG. 2, after stably installing the main frame 100, a flat panel display TV 2 is positioned on top of the main frame 100 in such a manner that wires drawn from the TV 2 extend through the wire through-hole 144 of the second frame 140.

The panel 200 is retained by the first insertion holes 122a (refer to FIG. 1) of the first frames 120. Particularly, the first latches 210 formed on upper and lower portions of left and right sides of the inner surface of the panel 200 are inserted into the corresponding first insertion holes 122a.

Referring to FIG. 3, after coupling the panel 200 to the first frames 120, wires drawn from the flat panel display TV 2 are hidden by the panel 200 without being exposed to the outside.

FIG. 4 shows a flat panel display TV stand according to a first embodiment of the present invention. The stand has a shelf 400 positioned in front of the panel 200 shown in FIG. 3, in order to accommodate a DVD player or VCR.

The process for installing the shelf 400 will be described later in more detail.

FIG. 5 is an exploded perspective view showing a flat panel display TV stand according to a second embodiment of the present invention, when used for both hiding and retaining.

Referring to FIG. 5, the flat panel display TV stand according to the second embodiment of present invention includes a plurality of panels 200 positioned on the first frames 120 of the main frame 100 and a support frame 300 positioned on the main frame 100 to accommodate a flat panel display TV.

The process for installing the flat pane display TV stand shown in FIG. 5 will now be described in detail with reference to FIGs. 6a to 6g.

Referring to FIG. 6a, when the flat panel display TV stand is to be installed, the main frame 100 is positioned on a wall (not shown). The height adjustment unit 10 on the second frame 140, which is positioned near the bottom of the main frame 100, is adjusted to select a desired position of the main frame 100 on the wall.

The process of adjusting the height adjustment unit 10 has already been described with reference to FIG. 1, and repeated description thereof will be omitted herein.

The fixing holes 142 of the second frame 140, which are arranged from the top to the bottom of the main frame 100, are subjected to bolting.

The panels 200 are coupled to the first insertion holes 122a formed on the inner surface of the first frames 120 (refer to FIG. 5). In particularly, a plurality of panels 200 are arranged in the longitudinal direction of the first frames 120. One of the panels 200, which is positioned behind the flat panel display TV 2, has a wiring hole 220 formed thereon so that wires and cables, which are drawn from the flat panel display TV, can extend inside the panels 200.

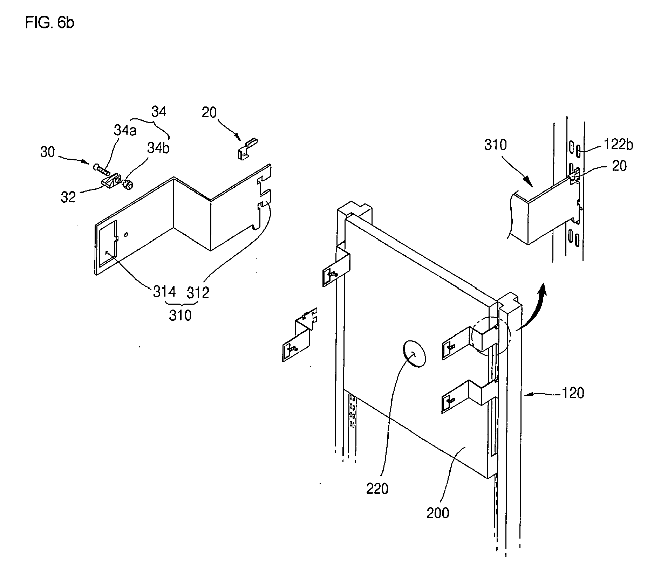

Referring to FIG. 6b, after installing the panels 200, the retainers 310 are positioned on the first frames 120.

Each retainer 310 has a retaining piece 312 formed thereon to be retained in the corresponding second insertion hole 122b of the first frames 120. The second insertion hole 122b, into which the retaining piece 312 is inserted, is elongated in the longitudinal direction so that, when the retainer provided with the retaining piece 312 is coupled thereto, the retainer 310 can float horizontally or vertically, due to the space formed in the upper portion of the interior of the second insertion hole 122b.

An anti-floating clip 20 is positioned on the upper end of the retaining piece 312 of the retainer 310 to prevent floating.

The anti-floating clip 20 may be preinstalled on the retainer 310 and then inserted into the second insertion hole 122b. Alternatively, the anti-floating clip 20 may be inserted via the upper end of the retaining piece 312 after the retainer 310 is inserted into the second insertion hole 122b. The anti-floating clip 20 fastens the retaining piece 312 to the second insertion hole 122b and prevents the retainer 310 from floating.

A compression member 30 is positioned inside a coupling hole 314 formed on the other end of the retainer 310. An adjustment unit 34 is installed after a compression piece 32 is positioned inside the coupling hole 314, as shown in the drawing.

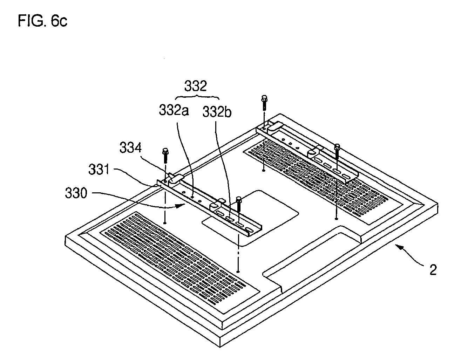

Referring to FIG. 6c, in order to install the flat panel display TV 2, the operator installs the second support frames 330 in conformity with the position of bolt holes on the rear surface of the flat panel display TV 2, while the retainer 310 (refer to FIG. 6b) is positioned on the first frames 120 (refer to FIG. 6b).

The normal holes 332a of the fastening holes 332 of the second support frame 320 are subjected to bolting to couple the flat panel display TV 2 to the second support frame 330. Then, the elongated holes 332b are positioned in conformity with the position of bolt holes on the flat panel display TV 2, and bolts are coupled thereto. The elongated holes 332b make it possible to accommodate various sizes of flat panel display TVs 2.

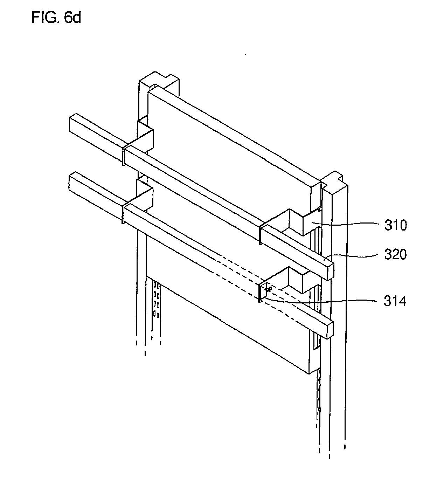

Referring to FIG. 6d, the first support frames 320 are coupled to the corresponding coupling holes 314 of the retainers 310 (refer to FIG. 6b).

As shown in the drawing, the first support frames 320, which are spaced from the retainers 310, are uniformly positioned. The adjustment pieces 34b (refer to FIG. 6c) of the retainers 310 are manually rotated, or the adjustment screws 34a (refer to FIG. 34a) are rotated by a driver (not shown), so that the compression pieces 32 (refer to FIG. 6c) are compressed against the outer surface of the first support frame 320 to prevent it from floating.

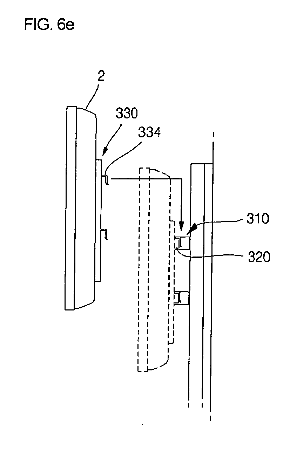

Referring to FIG. 6e, the flat panel display TV 2, which has the second support frame 330 installed thereon, is retained on the first support frame 320 in such a manner that the catches 334 on the second support frame 330 are positioned outside the corresponding retainers 310.

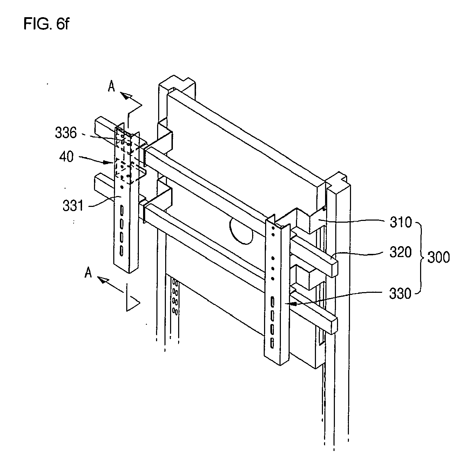

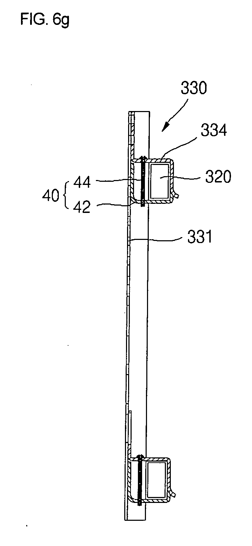

Referring to FIGs. 6f and 6g, after retaining the second support frame 330, which is coupled to the flat panel display TV 2 (not shown), on the first support frame 320, anti-floating member 40 are installed for safe installation of the second support frame 330 on the first support frame 320. To be brief, the flat panel display TV coupled to the second support frame 330 has been omitted.

FIG. 6G is a sectional view taken along line A-A of FIG. 6f. After bringing the anti-floating brackets 42 of the anti-floating members 40 into contact with the inner surface of the second support frame body 331, the operator inserts the anti-floating bolts 44 into through-holes 336 formed on the catches 334 and rigidly tightens them with a driver, for example.

The first support frame 320 is fastened and fixed to the second support frame 330, which is provided with the catches 334, by the anti-floating brackets 42 so that the flat panel display TV 2 (not shown), which is coupled to the second support frame 330, can be stably installed.

FIG. 7 shows a flat panel display TV stand according to a third embodiment of the present invention. The flat panel display TV, which is coupled to the support frame 300, is not shown in the drawing, and a plurality of shelves 400 are arranged in the longitudinal direction of the first frames 120.

The shelves 400, as shown in FIG. 4 or 7, have support brackets 410 and shelf retainers 420 assembled to each other by fixing bolts. The support brackets 410 have bolting holes formed thereon to be coupled to the shelf retainers 420.

The shelf retainers 420, which are installed on the first frames 120, have the same end structure as the retaining pieces 312 (refer to FIG. 6b) of the retainers 310 (refer to FIG. 6b). The anti-floating clips 20 (refer to FIG. 6b) are positioned on the upper end of the shelf retainers 420 and inserted into the second insertion holes 122b (refer to FIG. 4 or 6b) of the first frames 120, respectively.

Besides the shelf retainers 420, the first latches 210 (refer to FIG. 2) of the panel 200 also have the same structure as the retaining pieces 312 and are inserted into the first coupling holes 122a (refer to FIG. 6a) with the anti-floating clips 20 coupled thereto.

As shown in FIG. 7, the panel 200 has wiring holes 220 formed on both lateral surfaces thereof so that wires or cables, which are drawn from a DVD player (not shown) or VCR (not shown) positioned on top of the shelves 400, can easily lead to the rear surface of the panel 200.

The structure of the anti-floating clips 20 and the compression members (refer to FIG. 6b) are not limited to that shown in the drawings, and they may be replaced with any equivalent having similar operation and effect.

As mentioned above, the flat panel display TV stand according to the present invention is advantageous in that a TV equipped with a flat panel display (e.g. LCD or PDP) can be stably installed regardless of the type of wall, on which the TV is to be installed. The stand can fully support the weight of the TV and hides wires and cables drawn from the TV. This provides an aesthetic appearance.

In addition, the stand can additionally accommodate peripheral devices (e.g. DVD player or VCR), which are typically used together with the TV. As such, the stand can be used for various purposes.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A flat panel display TV stand comprising:
a main frame fastened to a wall to stably accommodate a flat panel display TV and
a panel positioned in front of the main frame while hiding wires drawn from the flat panel display TV.

2. The flat panel display TV stand as claimed in claim 1, wherein the main frame has first frames facing each other in an upright position with a gap between them and a plurality of second frames positioned in a longitudinal direction of an inside of the first frames.

3. The flat panel display TV stand as claimed in claim 2, wherein the first frames have an end fastened to the wall while extending backwards, the other end of the first frames bends outwards and then extends backwards, and insertion holes are formed on a bent inner surface of the first frames.

4. The flat panel display TV stand as claimed in claim 3, wherein the insertion holes are formed in a longitudinal direction of the first frames.

5. The flat panel display TV stand as claimed in claim 4, wherein the insertion holes have first insertion holes formed on one side of the bent inner surface of the first frames and second insertion holes formed in a line together with the first insertion holes while being spaced from the first insertion holes.

6. The flat panel display TV stand as claimed in claim 2, wherein both ends of the second frames are fixed on the first frames, and the second frames have fixing holes for installation on the wall.

7. The flat panel display TV stand as claimed in claim 2, wherein one of the second frames positioned near a top of the main frame has a wire through-hole formed thereon so that wires drawn from the flat panel display TV can pass through.

8. The flat panel display TV stand as claimed in claim 2, wherein one of the second frames positioned near a bottom of the main frame has a height adjustment unit to maintain a predetermined height from a floor to a bottom of the first frames.

9. The flat panel display TV stand as claimed in claim 1 or 5, wherein the panel has first latches formed on upper and lower portions of left and right sides of an inner surface of the panel, respectively, to be inserted into the first insertion holes of the first frames.

10. The flat panel display TV stand as claimed in claim 2, wherein the first frames have a bent portion formed on a lower end of an exterior of the first frames to avoid interference with a lower molding positioned along a lower side of the wall.

11. The flat panel display TV stand as claimed in claim 1, wherein the main frame has a support frame to accommodate the flat panel display TV.

12. The flat panel display TV stand as claimed in claim 11, wherein a wiring hole is formed on the panel of the main frame so that wires drawn from the flat panel display TV installed on the support frame and cables drawn from input and output terminals on a rear surface of the flat panel display TV can pass through.

13. The flat panel display TV stand as claimed in claim 12, wherein through-holes are formed on both lateral surfaces of the panel in a longitudinal direction of the panel so that wires or cables drawn from a DVD player or VCR can lead to a rear surface of the panel.

14. The flat panel display TV stand as claimed in claim 11, wherein the support frame comprises:
retainers formed in a longitudinal direction of the first frames while being spaced from each other, the retainers extending backwards to be inserted into the respective second insertion holes formed on opposite sides of the first frames to stably accommodate the flat panel display TV;
first support frames connected to the retainers in a transverse direction; and
second support frames having fastening holes formed on second support frame bodies for bolting to bolt holes formed on the rear surface of the flat panel display TV and catches retained on an inner surface of the second support frame bodies while being spaced from each other for installation on first support frame bodies.

15. The flat panel display TV stand as claimed in claim 14, wherein each retainer has a retaining piece formed on an end of the retainer so that an end of the retaining piece bends downwards to be retained in the corresponding second insertion hole and a coupling hole formed on the other end of the retainer to be coupled to the first support frames.

16. The flat panel display TV stand as claimed in claim 15, wherein an anti-floating clip is positioned on an upper end of the retaining piece of each retainer to prevent floating when coupled to the second insertion hole.

17. The flat panel display TV stand as claimed in claim 15, wherein a compression member is positioned in the coupling hole to compress a surface of the first support frames.

18. The flat panel display TV stand as claimed in claim 14, wherein the fastening holes of the second support frames are arranged in a longitudinal direction of the second support frame bodies and have a row of normal holes and a row of elongated holes positioned next to the normal holes so that the second support frames can be coupled to the fastening holes in conformity with a size of the flat panel display TV.

19. The flat panel display TV stand as claimed in claim 14, wherein anti-floating members are positioned on the catches of the second support frames to prevent the first support frames from floating left or right.

20. The flat panel display TV stand as claimed in claim 1 or 14, wherein a shelf is positioned in front of the panel to accommodate a DVD player or VCR.

21. The flat panel display TV stand as claimed in claim 20, wherein the shelf has support brackets positioned on left and right sides of a lower surface of the shelf, the DVD player or VCR being mounted on the shelf, and shelf retainers connected to the respective support brackets to fix the shelf to the main frame.

22. The flat panel display TV stand as claimed in claim 20, wherein a plurality of shelves are arranged in a longitudinal direction of the main frame.
